# FASCICULE DE BREVET EUROPEEN

(11) **EP 0 444 973 B1**
(45) Date de publication et mention de la délivrance du brevet: **07.12.1994**
(21) Numéro de dépôt: 91400143.3
(22) Date de dépôt: 23.01.1991
(51) Int. Cl.: B60L 5/20, B60L 5/22

(54) **Pantographe à deux têtes conjuguées pour motrices ferroviaires**
Scherenstromabnehmer mit zwei konjugierten Köpfen eines schienengebundenen Triebfahrzeuges
Pantograph with two related heads for railbond traction vehicle

(30) Priorité: 26.01.1990 FR 9000926
(43) Date de publication de la demande: 04.09.1991
(73) Titulaire: FAIVELEY TRANSPORT, 93400 Saint-Ouen Cédex (FR)
(72) Inventeur: Devaud, Alain, F-95240 Cormeilles-en-Parisis (FR); Cathala, Jacques, F-37510 Ballan-Mire (FR); Forte, Pascal, F-37200 Tours (FR)
(74) Mandataire: Keib, Gérard

(56) Documents cités:
- GB-A- 355 567
- US-A- 3 106 272

## Description

La présente invention concerne un pantographe destiné au captage du courant pour des motrices ferroviaires depuis des lignes aériennes à suspension caténaire. Il s'agit d'un pantographe dans lequel est améliorée la régularité du contact avec la ligne caténaire en éliminant pratiquement les décollements.

Pour réduire la probabilité de décollement entre le pantographe et la ligne caténaire, il est connu de réaliser des pantographes dits "à bandes indépendantes" comprenant un bras supérieur dont l'extrémité comporte un support sur lequel sont montées deux têtes de captage. Dans ce type de pantographe, chaque tête est montée sur ledit support par l'intermédiaire d'une suspension propre faisant intervenir par exemple un ressort hélicoïdal. Ces suspensions sont indépendantes.

Avec ces pantographes de l'art antérieur, on réduit la probabilité de décollement car la probabilité pour que les deux têtes, suspendues indépendamment, décollent simultanément de la ligne caténaire est inférieure à la probabilité de décollement d'une tête individuelle.

Cependant, il faut remarquer que les causes de ces décollements ne sont pas indépendantes. La cause principale vient des irrégularités qu'on peut rencontrer le long de la ligne de courant, notamment des pendules de suspension caténaire de cette ligne, qui la suspendent à un câble porteur fixé à des pylônes placés le long de la voie. Quand le pantographe passe au niveau d'une de ces irrégularités, les deux têtes sont affectées presque simultanément par une impulsion qui tend à les déconnecter de la ligne. Comme les suspensions sont indépendantes, les deux têtes peuvent décoller simultanément de la ligne si cette impulsion est suffisante. Un tel décollement complet du pantographe se traduit par une disjonction momentanée des installations électriques de la motrice et par l'apparition d'un arc électrique intense qui endommage à la fois les têtes du pantographe et la ligne caténaire s'il se répète trop souvent.

On connaît d'autre part un pantographe, décrit dans le brevet U.S 3 106 272 comportant plusieurs têtes montées rigidement sur un support. Afin de répartir l'effort de contact avec le fil caténaire entre les têtes de captage, des moyens de suspension symétriques sont fixés au support.

Cependant, ces moyens de suspension subissent une inertie importante car ils contrôlent le mouvement de la totalité de l'unité rigide constituée par les têtes de captage et le support.

L'invention a pour but de rendre pratiquement nulle la probabilité des décollements du pantographe.

Ainsi, l'invention a pour objet un pantographe pour motrices ferroviaires comprenant un bras supérieur dont l'extrémité comporte un support auquel sont raccordées deux têtes destinées à établir la jonction avec une ligne de courant caténaire, les têtes étant montées indépendamment l'une de l'autre sur le support par des moyens de raccordement qui les guident dans leur mouvement transversal à la ligne de courant, des moyens de suspension étant montés sur les moyens de raccordement de façon que, lorsqu'une des têtes subit un mouvement relativement au support, un effort ayant une direction opposée soit exercé sur l'autre tête.

Selon l'invention telle que décrite dans la revendication 1, ce pantographe est caractérisé en ce que chacune des têtes étant reliée sur le support par au moins une structure de raccordement ayant la forme d'un parallélogramme articulé dont un côté fait partie du support, avec son côté opposé solidaire de ladite tête et dont les autres côtés sont constitués par au moins deux bielles parallèles et de même longueur articulées à une extrémité sur ledit support et à l'autre extrémité sur ladite tête.

Grâce à ce dispositif, si l'une des têtes a tendance à se décoller de la ligne une force est appliquée sur l'autre tête qui a pour effet de la maintenir contre la ligne. Les décollements complets du pantographe sont donc pratiquement éliminés.

De plus, les moyens de suspension sont montés sur les moyens de raccordement des têtes montées indépendamment l'une de l'autre, de sorte que les mouvements des deux têtes sont conjugués par les moyens de suspension avec une faible inertie, correspondant à seulement une tête et sa structure de raccordement.

Cette configuration permet de guider efficacement les têtes transversalement à la ligne caténaire, suivant une perpendiculaire au plan de la voie et d'obtenir l'effet dynamique recherché.

Des versions préférées de l'invention sont presentées dans les revendication dépendantes 2 à 10.

Selon une version préférée de l'invention, les moyens de suspension comprennent un organe élastique. De manière avantageuse, cette suspension est amortie par un amortisseur prévu dans ces mêmes moyens de suspension.

Dans une réalisation avantageuse, les structures de raccordement en forme de parallélogramme correspondant respectivement aux deux têtes peuvent être placées en vis-à-vis de part et d'autre du support. Les structures de raccordement ainsi appariées sont alors reliées deux à deux par un organe de liaison fixé, à chaque extrémité, sur l'une des bielles articulées formant côtés de la structure de raccordement en forme de parallélogramme correspondant.

L'organe de liaison ci-dessus peut incorporer les dispositifs de suspension et d'amortissement.

D'autres particularités et avantages de cette invention apparaîtront dans la description ci-dessous. Aux dessins annexés, donnés à titre d'exemple non limitatif:

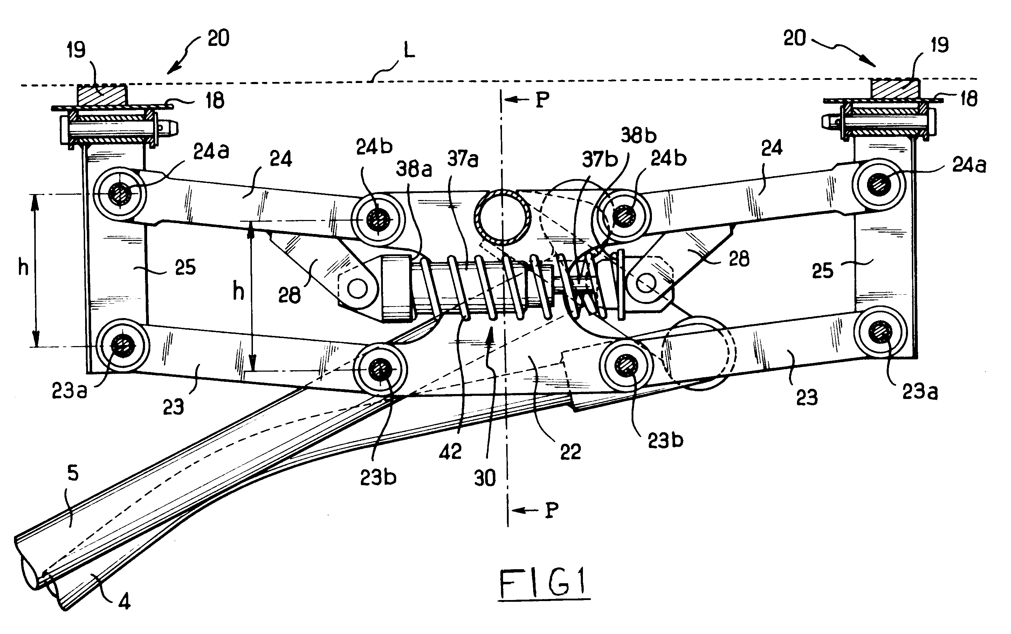

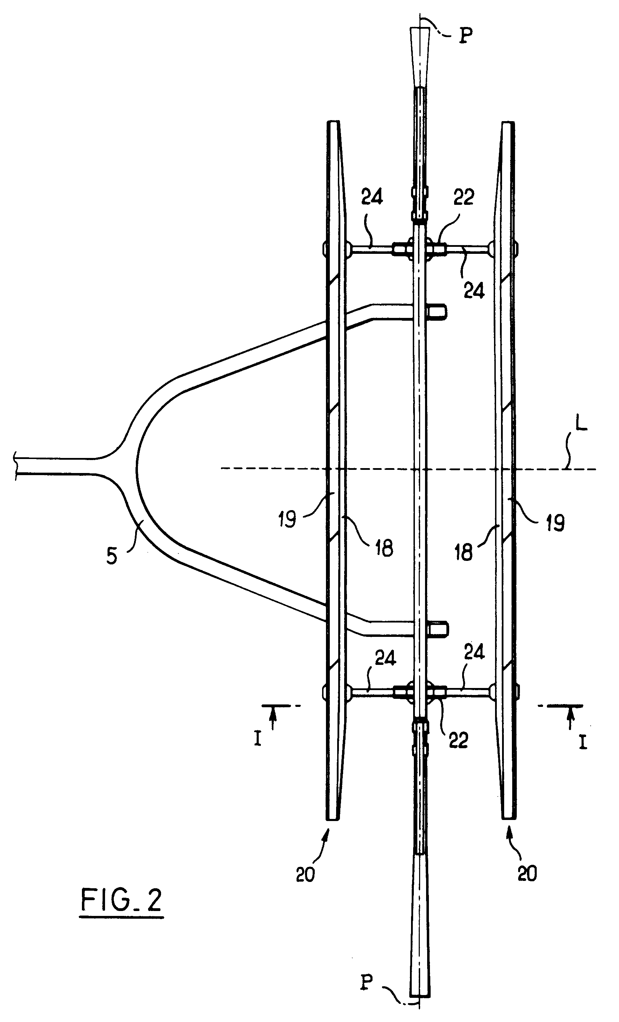

- la figure 1 est une vue en élévation de la partie supérieure d'un pantographe selon l'invention suivant le plan I-I de la figure 2; et
- la figure 2 est une vue de dessus de ce pantographe.

Sur le bras supérieur 5 du pantographe sont montés deux supports 22 destinés à soutenir les têtes de captage 20. Chaque support 22 est articulé sur le bras 5 et, de manière connue, une barre de stabilisation 4 est prévue pour maintenir le support 22 dans une position stable par rapport à la ligne caténaire L (représentée en tirets aux figures).

Ce pantographe comprend deux têtes 20 dans lesquelles un archet 18 supporte une ou plusieurs bandes de frottement 19 qui s'étendent de manière sensiblement perpendiculaire à la ligne caténaire L et dans un plan parallèle à la voie. Les deux têtes sont raccordées aux supports 22 par des moyens de raccordement qui les guident en direction de la ligne L.

Ainsi, chaque tête 20 comporte deux tiges 25 qui s'étendent perpendiculairement aux directions définies par les bandes de frottement 19 et par la ligne caténaire L. Sur chacune de ces tiges 25 viennent s'articuler deux bielles 23, 24 parallèles et de même longueur, les axes d'articulation 23a, 24a étant situés sur la tige 25 à une distance h. Ces deux bielles 23, 24 sont articulées à leurs extrémités opposées sur un des supports 22, les axes d'articulation correspondant 23b, 24b étant séparés, sur ce support 22, de la même distance h. Les moyens de raccordement des têtes 20 sur le support 22 comprennent donc deux paires de structures de raccordement en forme de parallélogramme articulé dont un côté fixe, de longueur h fait partie d'un support 22, dont le côté opposé à ce côté fixe fait partie d'une tige 25 et dont les deux autres côtés opposés sont constitués des deux bielles articulées (23, 24).

Les axes d'articulation 23a, 23b, 24a, 24b aux sommets de ces parallélogrammes sont tous parallèles à la direction des bandes de frottement 19, de sorte que les têtes 20 sont assujetties à se déplacer, par rapport au support 22, selon un mouvement de translation transversal à la ligne caténaire L, perpendiculaire au plan de la voie.

Pour chacune de ces structures de raccordement en forme de parallélogramme, la bielle supérieure 24 comporte une saillie 28 transversalement à son axe.

L'ensemble de ces moyens de raccordement (structures en forme de parallélogramme et saillies 28) présente une symétrie de position par rapport à un plan P qui passe au milieu du support 22 et qui est perpendiculaire à la direction de la ligne caténaire L et donc au plan de la voie.

Les saillies 28 de bielles appariées, c'est-à-dire situées en vis-à-vis par rapport à ce plan P sont reliées par un organe de liaison 30.

L'organe de liaison 30 est, dans l'exemple illustré, articulé à ses extrémités sur les extrémités des saillies de bielle 28 correspondant.

De manière avantageuse, l'organe de liaison 30 comporte un ressort hélicoïdal 42 et un amortisseur hydraulique 37a, 37b dans lequel un piston 37b raccordé à l'une des saillies de bielle 28 peut coulisser dans un cylindre 37a qui contient un fluide hydraulique et qui est raccordé à la saillie de bielle 28 appariée. Dans cette configuration, le ressort hélicoïdal 42 s'appuie à ses deux extrémités sur des épaulements 38a, 38b présents respectivement sur le cylindre 37a et sur l'extrémité de l'axe du piston 37b.

Avec ce pantographe, si l'une des têtes 20 a tendance à se décoller de la ligne caténaire, c'est-à-dire si elle subit, par rapport au support 22, une impulsion en direction de la motrice, alors un effort de direction opposée est communiqué à l'autre tête 20 par l'intermédiaire des structures de raccordement en forme de parallélogramme et des organes de liaison 30 : les bielles 23, 24 pivotent autour des axes 23a, 23b, 24a, 24b et le déplacement de la saillie 28 est transmis à la saillie 28 appariée par l'organe de liaison 30 ; il en résulte un effort qui maintient la seconde tête 20 contre la ligne caténaire L. Comme l'organe de liaison 30 fait intervenir un ressort 42, il assure aussi la suspension élastique des têtes 20 qui permet à la partie supérieure du pantographe de répondre à des variations de l'effort de contact entre les bandes de frottement 19 et la ligne caténaire L. L'amortissement hydraulique permet en outre d'atténuer les variations de cet effort de contact en réduisant l'amplitude du mouvement des têtes 20.

On élimine pratiquement les décollements entre les bandes de frottement 19 et la ligne L et, par ce même montage, on améliore la régularité de l'effort de contact.

Il faut remarquer que les suspensions amorties du pantographe au niveau de sa tête demandent habituellement à utiliser un amortisseur ayant un coefficient d'amortissement relativement faible avec la contrainte d'un encombrement minimum pour éviter de nuire à la masse et à l'aérodynamisme du dispositif. Ce type d'amortisseur comporte en général un frottement solide non négligeable face à l'amortissement visqueux obtenu et comme ce frottement solide n'est pas bien maîtrisé, la réponse de la suspension amortie ne sera pas contrôlée de façon satisfaisante. Grâce au montage proposé par la présente invention, on peut réaliser cette suspension amortie avec un coefficient d'amortissement visqueux plus élevé de sorte qu'on n'est plus gêné par le frottement solide. En effet, les structures de raccordement des têtes en forme de parallélogramme ainsi que les saillies de bielle 28 réalisent, lors du pivotement de ces structures, une réduction d'amplitude entre le mouvement des têtes 20 transversalement à la ligne L et le mouvement transmis à l'organe de liaison 30. On peut ainsi avoir un amortissement plus fort entre le piston 37b et le cylindre 37a pour délivrer le même amortissement effectif au niveau des têtes 20. La fiabilité de la suspension amortie est donc améliorée.

Bien entendu, l'invention n'est pas limitée à l'exemple particulier décrit ci-dessus. De nombreuses variantes géométriques peuvent lui être apportées sans sortir du cadre de l'invention.

## Revendications

1. Pantographe pour motrices ferroviaires comprenant un bras supérieur (5) dont l'extrémité porte au moins un support (22) auquel sont raccordées deux têtes (20) destinées à établir la jonction avec une ligne de courant caténaire (L), les têtes (20) étant montées indépendamment l'une de l'autre sur le support (22) par des moyens de raccordement (23, 24, 25) qui les guident dans leur mouvement transversal à la ligne de courant (L), des moyens de suspension (30) étant montés sur les moyens de raccordement (23, 24, 25) de façon que, lorsqu'une des têtes (20) subit un mouvement relativement au support (22), un effort ayant une direction opposée soit exercé sur l'autre tête (20), ledit pantographe étant caractérisé en ce que chacune des têtes (20) étant reliée au support (22) par au moins une structure de raccordement ayant la forme d'un parallélogramme articulé dont un côté fait partie du support (22) avec son côté opposé solidaire de ladite tête (20) et dont les autres côtés sont constitués par au moins deux bielles parallèles et de même longueur (23, 24) articulées à une extrémité (23b, 24b) sur le support (22) et à l'autre extrémité (23a, 24a) sur ladite tête (20).

2. Pantographe conforme à la revendication 1, caractérisé en ce que les moyens de suspension (30) comprennent un organe élastique (42).

3. Pantographe conforme à l'une des revendications 1 ou 2, caractérisé en ce que lesdits moyens de suspension (30) comprennent un amortisseur (37a, 37b) pour amortir les mouvements des têtes (20) relativement au support (22).

4. Pantographe conforme à la revendication 1, caractérisé en ce que les deux têtes (20) ainsi que leurs structures de raccordement en forme de parallélogramme sont placées en vis-à-vis de part et d'autre du support (22) et en ce que les structures de raccordement ainsi appariées sont reliées deux à deux par un organe de liaison (30) fixé, à chaque extrémité, sur l'une des bielles articulées (23, 24) formant côtés de la structure de raccordement en forme de parallélogramme correspondant.

5. Pantographe conforme à la revendication 4, caractérisé en ce que l'organe de liaison (30) est monté sur les bielles (23, 24) de sorte que, lorsqu'une des têtes (20) subit un mouvement par rapport au support (22), un effort de direction opposée soit exercé sur l'autre tête (20) par l'intermédiaire des structures de raccordement en forme de parallélogramme et de l'organe de liaison (30).

6. Pantographe conforme à l'une des revendications 4 ou 5, caractérisé en ce que la fixation de l'organe de liaison (30) sur une bielle articulée (23, 24) est réalisée sur une saillie (28) que comporte cette bielle en une direction transversale à son axe.

7. Pantographe conforme à l'une des revendications 4 à 6, caractérisé en ce que l'organe de liaison (30) présente une élasticité pour assurer la suspension des têtes (20).

8. Pantographe conforme à l'une des revendications 4 à 7, caractérisé en ce que l'organe de liaison (30) assure en outre l'amortissement du mouvement des têtes (20) relativement au support (22).

9. Pantographe conforme à la revendication 7, caractérisé en ce que l'élasticité de l'organe de liaison (30) est obtenue par un ressort hélicoïdal (42).

10. Pantographe conforme à la revendication 8, caractérisé en ce que l'amortissement fourni par l'organe de liaison (30) est obtenu par un dispositif hydraulique (37a, 37b).

## Claims

1. A pantograph for rail motor coaches comprising a top arm (5), the end of which bears at least one support (22) to which are connected two heads (20) adapted to establish connection with a catenary power line (L), the heads (20) being mounted independently of one another on the support (22) by connection means (23, 24, 25) which guide them in their transverse movement relative to the power line (L), suspension means (30) being mounted on the connection means (23, 24, 25) so that when one of the heads (22) undergoes a movement relatively to the support (22) a force having an opposite direction is exerted on the other head (20), said pantograph being characterised in that each of the heads (20) being connected to the support (22) by at least one connection structure in the form of an articulated parallelogram one side of which forms part of the support (22) with its opposite side connected to the said head (20) and the other sides of which are formed by at least two parallel links of the same length (23, 24) articulated at one end (23b, 24b) on the support (22) and at the other end (23a, 24a) on said head (20).

2. A pantograph according to claim 1, characterised in that the suspension means (30) comprise an elastic member (42).

3. A pantograph according to claim 1 or 2, characterised in that the said suspension means (30) comprise a shock-absorber (37a, 37b) to damp the movements of the heads (20) relatively to the support (22).

4. A pantograph according to claim 1, characterised in that the two heads (20) and their parallelogram connection structures are disposed facing one another on either side of the support (22) and in that the connection structures thus paired are connected in twos by a connecting member (30) fixed at each end to one of the articulated links (23, 24) forming sides of the corresponding parallelogram connection structure.

5. A pantograph according to claim 4, characterised in that the connecting member (30) is mounted on the links (23, 24) so that when one of the heads (20) undergoes a movement relative to the support (22) a force in the opposite direction is exerted on the other head (20) by means of the parallelogram connection structures and the connecting member (30).

6. A pantograph according to claim 4 or 5, characterised in that the fixing of the connecting member (30) on an articulated link (23, 24) is effected on a projection (28) on said link in a transverse direction relative to its axis.

7. A pantograph according to any one of claims 4 to 6, characterised in that the connecting member (30) has elasticity to ensure suspension of the heads (20).

8. A pantograph according to any one of claims 4 to 7, characterised in that the connecting member (30) also provides damping of the movement of the heads (20) relatively to the support (22).

9. A pantograph according to claim 7, characterised in that the elasticity of the connecting member (30) is produced by a helical spring (42).

10. A pantograph according to claim 8, characterised in that the damping provided by the connecting member (30) is produced by a hydraulic device (37a, 37b).

## Patentansprüche

1. Scherenstromabnehmer für Eisenbahntriebwagen, mit einem oberen Arm (5), dessen Ende wenigstens eine Halterung (22) trägt, mit der zwei Köpfe (20) verbunden sind, die dazu bestimmt sind, die Verbindung mit einer Kettenstromleitung (L) herzustellen, wobei die Köpfe (20) unabhängig voneinander durch Verbindungsmittel (23, 24, 25), die sie bei ihrer Bewegung quer zu der Stromleitung (L) führen, in der Halterung (22) angebracht sind, und an den Verbindungsmitteln (23, 24, 25) Aufhängungsmittel (30) angebracht sind, derart, daß bei einer Bewegung eines der Köpfe (20) relativ zur Halterung (22) auf den anderen Kopf (20) eine Kraft in entgegengesetzter Richtung ausgeübt wird, wobei der Scherenstromabnehmer dadurch gekennzeichnet ist, daß jeder der Köpfe (20) mit der Halterung (22) mittels einer Verbindungsstruktur verbunden ist, die die Form eines gelenkigen Parallelogramms besitzt, dessen eine Seite Teil der Halterung (22) ist, wobei seine gegenüberliegende Seite mit dem Kopf (20) verbunden ist, und dessen andere Seiten von wenigstens zwei parallelen Verbindungsstangen gleicher Länge (23, 24) gebildet werden, die mit einem Ende (23b, 24b) an der Halterung (22) und mit dem anderen Ende (23a, 24a) am Kopf (20) angelenkt sind.

2. Scherenstromabnehmer gemäß Anspruch 1, dadurch gekennzeichnet, daß die Aufhängungsmittel (30) ein elastisches Element (42) umfassen.

3. Scherenstromabnehmer gemäß einem der Ansprüche 1 oder 2, dadurch gekennzeichnet, daS die Aufhängungsmittel (30) eine Dämpfungseinrichtung (37a, 37b) umfassen, um die Bewegungen der Köpfe (20) relativ zur Halterung (22) zu dämpfen.

4. Scherenstromabnehmer gemäß Anspruch 1, dadurch gekennzeichnet, daß die zwei Köpfe (20) sowie ihre parallelogrammförmigen Verbindungsstrukturen auf beiden Seiten der Halterung (22) einander gegenüber angeordnet sind und daß die so gepaarten Verbindungsstrukturen paarweise durch ein festes Verbindungselement (30) verbunden sind, das an jedem Ende an einer der angelenkten Verbindungsstangen (23, 24) befestigt ist, die jeweils eine Seite der entsprechenden parallelogrammförmigen Verbindungsstruktur bilden.

5. Scherenstromabnehmer gemäß Anspruch 4, dadurch gekennzeichnet, daß das Verbindungselement (30) an den Verbindungsstangen (23, 24) derart angebracht ist, daß bei einer Bewegung eines der Köpfe (20) relativ zur Halterung (22) durch die dazwischen eingesetzten parallelogrammförmigen Verbindungsstrukturen und das Verbindungselement (30) auf den anderen Kopf (20) eine Kraft in entgegengesetzter Richtung ausgeübt wird.

6. Scherenstromabnehmer gemäß einem der Ansprüche 4 oder 5, dadurch gekennzeichnet, daß die Befestigung des Verbindungselementes (30) an einer angelenkten Verbindungsstange (23, 24) an einem Vorsprung (28) ausgebildet ist, den diese Verbindungsstange in transversaler Richtung bezüglich ihrer Mittellinie aufweist.

7. Scherenstromabnehmer gemäß einem der Ansprüche 4 bis 6, dadurch gekennzeichnet, daß das Verbindungselement (30) eine Elastizität aufweist, um die Aufhängung der Köpfe (20) zu gewährleisten.

8. Scherenstromabnehmer gemäß einem der Ansprüche 4 bis 7, dadurch gekennzeichnet, daß das Verbindungselement (30) außerdem die Dämpfung der Bewegung der Köpfe (20) relativ zur Halterung (22) gewährleistet.

9. Scherenstromabnehmer gemäß Anspruch 7, dadurch gekennzeichnet, daß die Elastizität des Verbindungselementes (30) durch eine Schraubenfeder (42) erhalten wird.

10. Scherenstromabnehmer gemäß Anspruch 8, dadurch gekennzeichnet, daß die vom Verbindungselement (30) geschaffene Dämpfung durch eine Hydraulikeinrichtung (37a, 37b) erhalten wird.
